# EUROPEAN PATENT APPLICATION

(11) **EP 0 781 008 A1**
(43) Date of publication of application: **25.06.1997**
(21) Application number: 95480199.9
(22) Date of filing: 20.12.1995
(51) Int. Cl.: H04L 12/56, H04Q 11/04

(54) **Method and system for combining connections over ATM network**

(71) Applicant: INTERNATIONAL BUSINESS MACHINES CORPORATION, Armonk, NY 10504 (US)
(72) Inventor: Duault, Maurice, F-06700 St. Laurent du Var (FR); Nicolas, Laurent, F-06270 Villeneuve Loubet (FR); Galand, Claude, F-06800 Cagnes-sur-Mer (FR)
(74) Representative: Schuffenecker, Thierry

(57) **Abstract**

In order to interconnect over the ATM cell switching network two end users which want to exchange different kinds of traffic, as voice in different coding schemes, fax, data traffic and signaling traffic, the two end users are connected with a plurality of virtual channel identifiers. However, within the network the plurality of virtual channel identifiers are treated as a single connection. There is only a single entry in the connection table of each network node. Part of the virtual channel identifier is ignored in the network nodes and remains unchanged. Each virtual channel can be considered independently at the end user level, while the network manages a single connection which saves network resources.

## Description

### Technical field

The present invention relates to high speed communication systems in the Asynchronous Transfer Mode (ATM) and in particular to the transport of combined traffic over ATM.

### Background art

The telecommunications carrier industry began to develop a concept called "Broadband Integrated Services Digital Network" or B-ISDN. This was conceived as a carrier service to provide high speed communications to end users in an integrated way. The technology selected to deliver the B-ISDN service is called "Asynchronous Transfer Mode" or ATM. The almost universal acceptance of ATM comes from the fact, that ATM is a compromise. ATM does handle all the different kinds of communication traffic, as voice, data, image, video, high quality sound, multimedia and many others, and it can be used in both the LAN (Local Area Network) and the WAN (Wide Area Network) network environments. But ATM does not handle voice as efficiently as does an isochronous network, it does not handle video as easily as isochronous transfer does, it certainly does not handle data as effectively or efficiently as a Packet Transfer Mode or Frame Relay system, and it is likely to be problematic in any high error rate environment, such as types of traffic adequately and in an integrated way. This means that instead of having a proliferation of many specialised kinds of equipment for different functions we can have a single type of equipment and network which will do everything.

The principle key concepts of ATM are as follows:
■ All information (voice, image, video, data ...) is transported through the network in very short, fixed length (48 data bytes plus a 5 byte header) blocks called "cells".
■ The information flow along paths, called "virtual channels", is set up as a series of pointers through the network. The cell header contains an identifier that links the cell to the correct path for it to take towards its destination. Cells on a particular virtual channel always follow the same path through the network and are delivered to the destination in the same order in which they are received.
■ ATM is designated so that simple hardware based logic elements may be employed at each node to perform the switching. On a link of 1 Gbps a new cell arrives and a cell is transmitted every 0.43 microsec. There is not a lot of time to decide what to do with an arriving cell.
■ At the edges of the network user data frames are broken up into cells. Continuous data streams such as voice and video are assembled into cells. At the destination side of the network the user data frames are reconstructed from the received cells and returned to the end user in the form that they were delivered to the network. This adaptation function is considered part of the network but is in a higher layer function, which is called ATM Adaptation Layer (AAL).
■ The ATM cell switching network only checks cell headers for errors and simply discards cells in error. The adaptation function AAL is external to the switching network and depends somewhat on the type of traffic but for data traffic it usually checks for errors in data frames received and if one is found then it discards the whole frame. At no time does the ATM network attempt to recover from errors by the re-transmission of information. This function is up to the end user devices and depends on the type of traffic being carried and the adaptation layer being used.

Information about ATM networks can be found for example in: "High Speed Networking Technology: An Introductory Survey", June 1993, Document Number GG24-3816-01, IBM International Technical Support Center, Raleigh.

Document EP-A-0 661 878 presents a network-based image processing system and protocols with a calling and called party to ascertain whether the originating image file format and protocol matches the called party preferred file format, and converts the formats if necessary. It is based on high level application functions and does not require any sub multiplexing capabilities in the network.

Document EP-A-0 637 185 presents an ATM-based radio communication system adapted for multimedia communications between 2 radio terminals and a repeater. It uses a common channel between the repeater and the radio communication terminals , and a meta-signalling procedure to set up channels. It does not use sub multiplexing capabilities within a connection.

Document US-A-4 398 299 presents a protocol between a diagnostic control device and a downstream device based on "Read" and "Request" primitives. It is an application level protocol which does not require any sub multiplexing capability in the network.

It is now desirable to interconnect over the ATM network users using phone terminals to exchange voice, fax and data traffic.

In the prior art one solution to the problem would be to set up one connection for each type of traffic to be transported. This has the disadvantage of multiplying the number of connections, using network resources to perform connection setup and maintaining routing information. Moreover the Terminal Equipment (TE) would have to maintain consistency among these connections. However, it is not efficient to reserve the bandwidth of a virtual channel for the signalling channel which has an extremely low throughput.

Another solution to the problem would be to multiplex several flows into a single ATM connection. This could be achieved either by having a control message indicating the type of the data or by an additional header in the payload to differentiate these flows.

The first approach is not desirable because, first this type of control messages should be very short for overhead and performances reasons, and second because there is the risk that voice and data traffic are mixed when a single control message is lost.

There remains the possibility to have a payload identifier in every message. One example is voice over Frame Relay which uses a 2 byte header for each transmitted packet. This would require to use an AAL5 type of adaptation layer to carry the voice packet and the voice header. This solution is not acceptable in ATM because of the overhead it induces.

Another solution would be to use AAL3/4 which allows to multiplex several channels. Again, the overhead induced by AAL3/4 is not acceptable when compared to AAL1 overhead.

In conclusion the idea of multiplexing voice, data and control flows into a single VC provides too many problems.

### Summary of the Invention

The present inventions avoids the above difficulties and provides a solution wherein a virtual channel is assigned to each flow while managing the set of virtual channels as a single connection. This has the advantage that at the end user level (TE), each channel can be considered independently and support the AAL that best fits the type of traffic, while the ATM network manages a single connection which saves network resources. This allows also to reserve aggregate bandwidth for the set of channels, letting the TE manage the sharing of bandwidth between each channel.

According to the invention there is disclosed a system and a method as set forth in the independent claims 1 and 10.

### Brief Description of the Drawings

The invention will best be understood in the following description accompanying the drawings in which:
Figure 1 shows the routing concept in an ATM network.
Figure 2 shows the relationship between link, virtual path and virtual channel.
Figure 3 is a representation of the ATM cell format.
Figure 4 shows the relations between 2 peer ATM Adaptation Layers.
Figure 5 illustrates the ATM switching process.
Figure 6 illustrates the ATM network according to the present invention.
Figure 7 illustrates the label swapping process according to the present invention.

### Description of the Preferred Embodiment

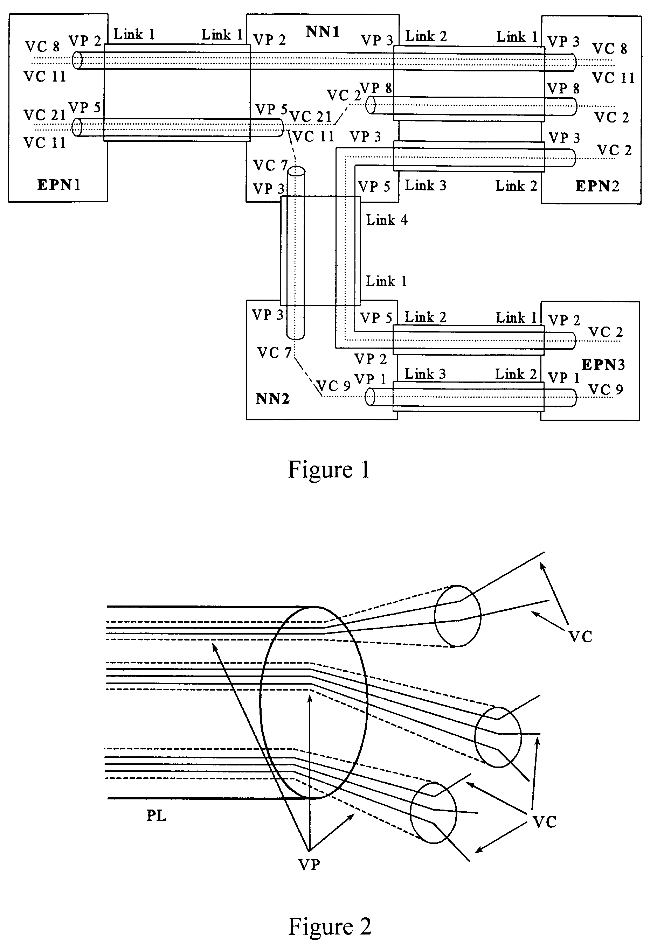

The key concepts in ATM are those relating to how data is routed through the network. Figure 1 illustrates these concepts. The concept of a virtual channel VC is defined in ATM as a unidirectional connection between end users. A virtual path VP is a route through the network representing a group of 2**16 or 65536 virtual channels. Virtual paths may exist between ATM endpoints, as between endpoint node EPN1 and endpoint node EPN2 and between endpoint node EPN2 and endpoint node EPN3 in Figure 1. Virtual paths may further exist between ATM network nodes or switches and ATM endpoint nodes, as between ATM network node NN1 and endpoint node EPN1, ATM network node NN1 and endpoint node EPN2 and between network node NN2 and endpoint node EPN3 in Figure 1. A virtual path may also exist between ATM network nodes as for example between network node NN1 and network node NN2 in Figure 1. A virtual path may be routed through an ATM switch by reference only to the virtual path number or it may terminate in an ATM switch. A virtual path entering an endpoint node always terminates in that endpoint node.

A virtual channel connection VCC is the end to end connection along which a user sends data. Whilst a virtual channel connection is defined to be unidirectional, it must be noted that virtual channel connections always occur on pairs. One virtual channel connection in each direction. Thus a bidirectional communication channel consists of a pair of virtual channel connections carried over the same route through the network. The relationship between links, virtual paths and virtual channels is summarized in Figure 2. A physical link PL comprises a plurality of virtual paths VP and each virtual path comprises a plurality of virtual channels VC.

A virtual channel is a separately identified data flow within a link or a virtual path. A virtual channel connection through the network is a sequence of interconnected, concatenated virtual channels. It is important to note that the scope of the numbering of each entity is just within the entity above it in the hierarchy. For example, all virtual paths may exist on all links. So virtual path number 3 VP3, in Figure 1, exists on links 2, 3 and 4 at network node NN1 and all virtual paths are unrelated to each other. There could also be a virtual channel number 17 in every virtual path in a node.

Virtual paths and virtual channels are only numbers. They identify a virtual (logical) path along which data may flow. They have no inherent capacity restrictions in terms of data throughput. That means that dividing the link into virtual paths and virtual channels has nothing whatever to do with division of link capacity. It is possible to saturate any link, no matter which speed, with the data on one virtual channel, even if the link had all possible virtual paths and virtual channels defined.

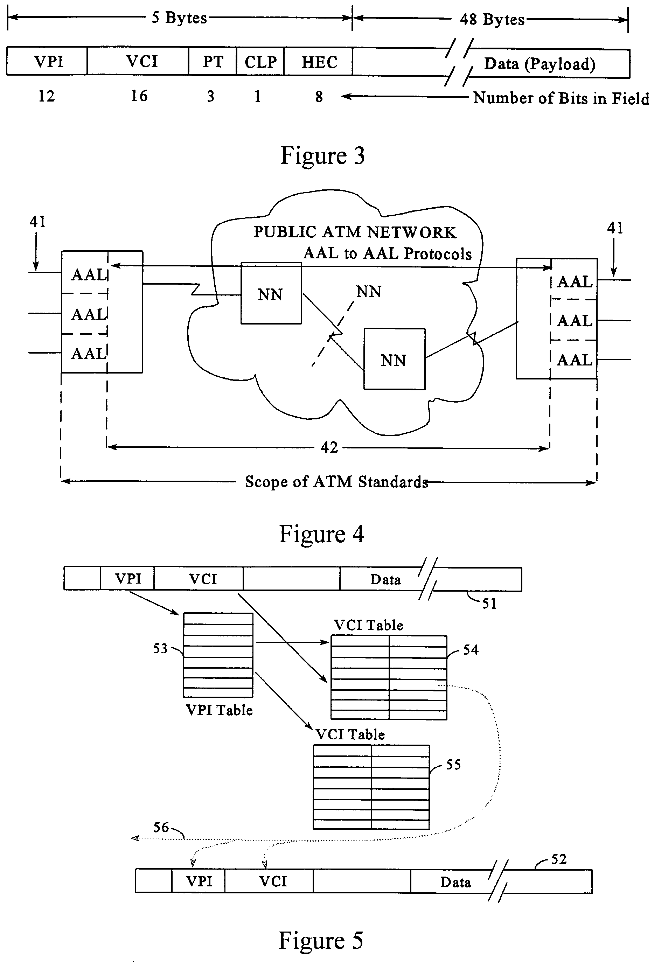

In Figure 3 is shown a typical ATM cell format. An ATM cell is always 48 bytes of data with a 5 byte header. It may not be longer or shorter. This cell size was determined by the CCITT (now called the ITU-T) as a compromise between voice and data requirements.

The most important fields in the cell header are the Virtual Path Identifier VPI and the Virtual Channel Identifier VCI. Together these identify the connection (called a virtual connection) that this cell belongs to. There is no destination network address because this would be too much of an overhead for a 48 byte cell to carry.

Three bits are available for payload type identification PT.

When the Cell Loss Priority CLP is set to 1 it indicates that the cell is of low priority. That means, that if the system needs to discard cells to relieve congestion then this cell should be discarded first.

The Head Error Check field HEC allows the correction of all single bit errors in the header part of the cell or the detection of most single and multi-bit errors.

In order to make an ATM network practical it is necessary to adapt the internal network characteristics to those of the various traffic types that will use the network. This is the purpose of the ATM adaptation layer AAL.

An ATM network carries cells from one end of the network to the other. While the cell header has error checking in it, there is no error check on the data part of the cell. In addition, cells can be lost or discarded during transport and in error situations cells could get out of sequence and/or duplicated cells.

The ATM Adaptation Layer enhances the service provided by the ATM layer to support functions required by the next higher layer. The functions performed in the AAL depend upon higher layer requirements.

One way of looking at the adaptation layer is to see it as a special form of terminal adapter. Figure 4 shows the logical structure of an ATM network. The "Service Interface" 41 is the interface to higher protocol layers and functions, and represents the boundary of ATM. The AAL connects the service interface to the ATM cell switching network 42.
The ITU-T has defined four different generic classes of network traffic that need to be treated differently by an ATM network. There are currently four different "AAL types" proposed, one for each traffic class.
■ Class A (Circuit Emulation) This service emulates a leased line. It is intended for constant-rate voice and video applications.
■ Class B (Variable Bit Rate Services) This is intended for voice and video traffic that is basically isochronous at the level of end user presentation, but which may be coded as variable-rate information. These services have a variable flow of information, need some timing relationship between the ends of the connection and are connection oriented.
■ Class C (Connection Oriented Data) This is traditional data traffic as known in an SNA or X.25 network. These services are connection oriented and have a variable flow of information.
■ Class D (Connectionless Data) This service has several uses in sending ad-hoc data but could be used for example, to carry LAN interconnection traffic where the protocol in use is inherently connectionless.

An ATM system is a connection oriented system. There is no way to send data in an ATM network exept on a pre-established connection (VCC). But there is also a connectionless mode of operation defined. This operates over the top of the ATM network. In this mode of operation, the first cell (or cells) of a group carries the full network address of the destination within its data (payload) field. Subsequent cells belonging to the same user data block do not carry a full network address, but rather are related to the first cell by having the same VPI/VCI.

There are four different AAL types:
■ AAL1: This provides function for service class A.
■ AAL2: This provides the required functions for variable-rate services class B. However, there are no defined standards in this area.
■ AAL3/4: This function provides service for both classes C and D. AAL3 and AAL4 were combined during the standards definition process as it was realised that the same process could perform both functions. It is quite complex and regarded by some as over-designed.
■ AAL5: This AAL provides functions for both classes C and D but is significantly simpler, albeit it is also less functional.

ATM networks route data internally using a process called "logical ID swapping". This is important because the network is constrained to deliver cells on a virtual connection in the same order in which they were presented to the network. In ATM there are two IDs for each virtual connection: the VPI and the VCI. Some ATM switches may only know about and switch VPs. Other switches will know about and switch both, VPs and VCs.

As it is shown in Figure 5 an ATM switch must keep a table 53 of VPIs relating to each physical link that it has attached. This table contains a pointer to the outbound link where arriving data must be routed. If the VP terminates in the particular ATM switch, then the ATM switch must keep a table 54, 55 of VCs for each terminating VP. This table contains pointers for the further routing of the data. The VC may be for example a signaling channel and terminate in this particular ATM switch. Alternatively, the VC may be logically connected to another VC through this ATM switch in which case the ATM switch must route the data to the appropriate outbound connection, identified by the link, the VPI and the VCI.

The operation of the ATM switch is as follows:

A cell is received and the VPI is used to locate an entry within the VPI table. From the table it is determined whether the VP terminates in this node or not. If the VP is switched (does not terminate) then the new VPI number and the outbound routing information is fetched from the VPI table. Only the VPI needs to be replaced here because the VCs within the VP are not regarded. (This case is not shown in Figure 5). If the VP terminates in this node then the VCI is used to locate the appropriate entry in the VCI table 54. There is a separate VCI table for each terminating VP. The new VPI and VCI values and the onward routing information 56 are then recovered from the VCI table 54. The cell 52 is then updated with the new VPI/VCI values and routed towards its destination using the routing information recovered from the table 54.

It is now desirable to interconnect over the ATM network users using phone terminals to exchange voice, fax and data traffic. The voice could use several coding schemes, so both ends must be aware of this, and it could be possible to switch from voice to fax or modem transmission. There is then a requirement to have an end-to-end signalling channel between the two terminal equipments (TE).

The TE can be directly connected to the ATM network, or can be attached to a Private Branche Exchange PBX which is connected to the ATM network. It must be possible for a user who is directly connected to the ATM network or attached to a PBX to communicate with any user, independently of the type of attachment.

Moreover, some users may still have dumb phone terminals. These users must be able to place or receive phone calls with anybody in the network. This is achieved by providing a default configuration using a basic subset of the services (no advanced voice compression, no dynamic switching to fax transmission for instance).

According to the present invention it has been developed to assign a VC to each flow while managing the set of VC as a single connection.

The benefit is that at the end user level (TE), each VC can be considered independently and support the AAL that best fits the type of traffic (for example AAL1 for voice, AAL5 for data and control information) while the ATM network manages a single connection (single connection setup, only one entry in connection tables) which saves network resources.

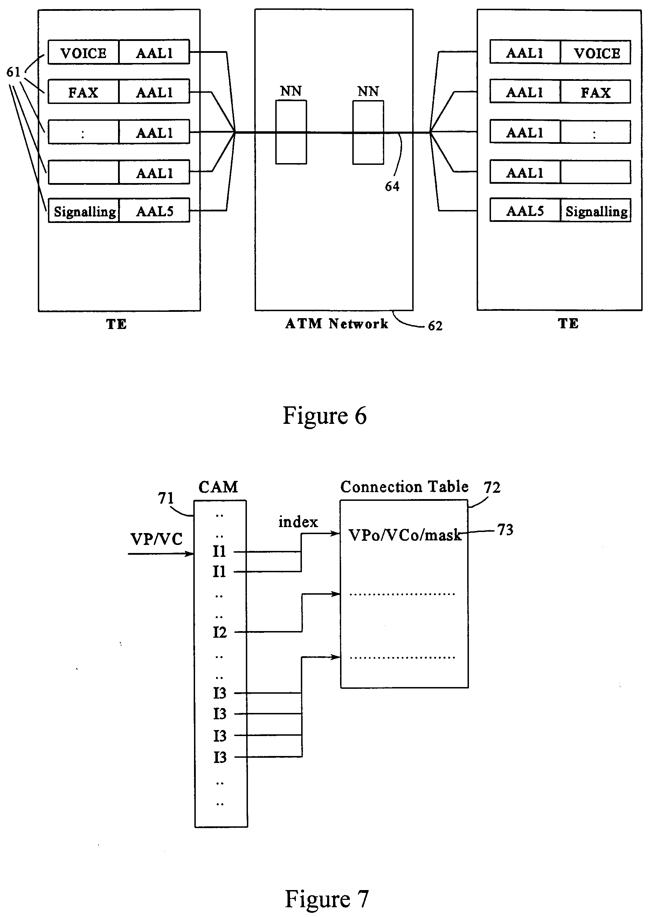

This inventive idea is represented in Figure 6. There are shown a plurality of signal sources 61 in a sending terminal equipment TE for different kind of information, as voice in different coding forms, fax, video, signaling. Each signal source has its AAL and is connected to a VC. These multiples channels are grouped together to be treated in the ATM network 62 as a single connection 64, which crosses a plurality of network nodes NN. At the receiving end terminal equipment TE the single connection is split up again into a plurality of channels, which are treated independently with the respective AAL.

This allows also to reserve aggregate bandwidth for the set of VC, letting the TE manage the sharing of bandwidth between each VC. An immediate alternate usage is for data applications that for their own purpose require a set of VC from one origin to one destination. The only answer so far is a VP service, that is a set of more than 65 000 VCs. The invention allows now any granularity (on a power of 2 basis) between a single VC and a full VP.

In order to realize the present invention the VCI tables shown in Figure 5 have to be modified. The number of bits allocated to the VCIs within the cell header is 16. The maximum number of VCIs per VPI is then 65536. Only very high speed links can make use of every possible VCI allowed in the ATM header. Most of the time, the number of VCIs per ATM link is restricted to a much smaller value. For example, 1000 VCI is a typical value. The allocation of the VCI numbers can be initiated by the remote ATM node. There is no guarantee that the remote node will allocate the lowest values of VCI numbers. If the VCI table is addressable directly with the VCI number, the table must contain 65536 entries, even if only 1000 entries are used. And there is such a table for each virtual path that terminates at the corresponding node.

A content Addressable Memory CAM as it is shown in Figure 7 permits to reduce the length of the VCI tables and provides a short access time to the appropriate information.

The combined VPI/VCI tables are split into 2 unities :
■ A Content Addressable Memory (CAM) 71.
   It has 65536 entries for each virtual path that ends at that node. If a VCI/VPI combination is input as an input address, the memory provides a corresponding index, which is then input as an address in the connection table. To improve the performance of the label switching process, the CAM can be located in a memory with a short access time.
■ A Connection table 72.
   It provides in response to the index from the content addressable memory all the necessary information to switch a cell : the Outbound VP/VC, the outbound link, the priority of the connection...

An element of the invention is to propose a mechanism to associate 2 ** N VCIs with the same ATM connection. With the arrangement shown in Figure 7, the number of ATM connection is smaller than the number of allocated VCI numbers. The invention permits to reduce the size of the connection table. It becomes proportional with the number of ATM connections. A single entry 73 in the connection table connects the cells of all the virtual channels that belong to the set of virtual channels to the subsequent or leaving virtual channels respectively. A mask field is associated to each ATM connection. The mask contains N binary '1' right justified, where 2 ** N is the number of VCIs associated to the same ATM connection.

The label swapping function according to the invention is as follows : When a VP ends at the respective network node, the VCI of the arriving cell is input to the respective CAM 71. The CAM outputs then an index I1-I3 which serves as an input address for the connection table 72. This index is the same for all VCIs that belong to the set of VCs of the same connection. The connection table contains under this index address the output VPIo, the output VCIo and a mask. The new VCI for the cell leaving the network node is then modified as follows:

VCI = ((VCIo) AND mask) OR (VCIi AND(NOT mask)) wherein VCI is the VCI number for the cell leaving the network node, VCIo is the VCI number that is read from the connection table 72 and VCIi is the VCI number that is presented as an input address to the CAM 71.

This modification of the VCIo guarantees that the N less significant bits of the VCI are kept unchanged, and that the 16-N most significant bit are swapped.

The swapped VPIo is not modified and the new VPI is equal to VPIo output from the connection table 72.

The invention permits to reduce the size of the connection table and it is possible to switch a plurality of VC that belong to the same connection with a single entry in the connection table. The connection table becomes proportional with the number of ATM connections.

## Claims

1. Method for routing data packets in a network node of a packet switching communication network comprising a plurality of network nodes interconnected with transmission links, each data packet carrying a routing label indicating the routing of the data packet on a particular link, said network node comprising a storage for a table of routing labels; the method comprising the steps of:
receiving a data packet over a link at said network node,
reading at said network node an initial routing label of said data packet,
addressing said storage with an address determined by said initial routing label in order to extract a new routing label,
replacing a portion of the new routing label by a corresponding portion of the initial routing label in order to get a modified routing label,
replacing in the data packet the initial routing label by the modified routing label, and
routing the data packet with the modified routing label on a corresponding link of said network node.

2. Method according to claim 1, wherein the modified routing label is achieved by the steps of :
receiving from said storage in addition to the new routing label a mask information indicating the portion of the new routing label which has to be replaced, and
replacing said portion of the new routing label by the corresponding portion of said initial routing label as indicated in the mask information.

3. Method according to claim 1 or 2 wherein said storage comprises a first memory and a further memory, the new routing label being extracted by the steps of:
receiving from said first memory an index in response to the initial routing label,
addressing said further memory with an address determined by said index, and
receiving from said further memory said new routing label in response to said index.

4. Method of claim 3, wherein said index is equal for a plurality of initial routing labels.

5. Method according to claim 4 wherein the data packets with one of said plurality of initial routing labels belong to a same connection between two end terminals.

6. Method according to any of the preceding claims wherein the data packets with the same initial routing labels belong to an information stream between two end terminals.

7. Method according to claim 6 wherein the same connection comprises a plurality of information streams.

8. Method according to claim 7, wherein each information stream of said same connection transmits a different kind of information, as voice in different coding schemes, fax, data or signaling between the two end terminals.

9. Method according to any of the preceding claims wherein the data packet is a cell having a fixed length.

10. A routing system for a packet switching communication network comprising a plurality of network nodes interconnected with transmission links, the routing system comprising means adapted to perform the steps of any of the claims 1 to 9.
